# EUROPEAN PATENT SPECIFICATION

(11) **EP 4 623 018 B1**
(45) Date of publication and mention of the grant of the patent: **21.10.2026**
(21) Application number: 23809197.9
(22) Date of filing: 17.11.2023
(51) Int. Cl.: C08G 59/18, C09D 163/00

(54) **MULTIPURPOSE WATERBORNE EPOXY FLOORING COMPOSITION**
WÄSSRIGE MEHRZWECK-EPOXYDBODENBELAGZUSAMMENSETZUNG
COMPOSITION DE REVÊTEMENT DE SOL ÉPOXY À BASE AQUEUSE POLYVALENTE

(30) Priority: 21.11.2022 EP 22208564
(43) Date of publication of application: 01.10.2025
(73) Proprietor: Sika Technology AG, 6340 Baar (CH)
(72) Inventor: BYRNE, Michael, Lancashire FY8 4TF (GB); GIMENO SANTOS, Patricia, 70186 Stuttgart (DE); JAHNKE, Philipp, 71706 Markgröningen (DE); PFEIFER, Werner, 70469 Stuttgart (DE); PUSEL, Thomas, 71282 Hemmingen (DE); VOCHATZER, Caroline, 70469 Stuttgart (DE)
(74) Representative: Sika Patent Attorneys
(86) International application number: PCT/EP2023/082254
(87) International publication number: WO 2024/110343

(56) References cited:
- EP-A1- 3 750 935

## Description

### Technical field

The invention relates to a multicomponent composition, to a process for producing a coating with the multicomponent composition and to the use of the multicomponent composition as multipurpose flooring composition.

### Prior art

The profile of requirements for floor coating systems is varied in some cases. Desirable properties for floor coatings may be, for example, an esthetically appealing appearance. Further demands are, for example, good workability and levelling ability.

Floor coating systems are multi-layer systems typically containing a primer layer for good adhesion on the substrate, on top thereof a scratch coat layer if the substrate must be levelled out, followed by a self-levelling layer if desired and finally a sealer layer. Said layers usually consist of separate commercial products and require a significant amount of different commercial products on the application site and in the storage facility. Some commercial products are advertised to be applied for more than one of the above-mentioned purposes, however none of the current solutions can be applied as a thin layer, for example as primer layer, and at the same time as a thicker layer, like a self-levelling layer for instance, without drawbacks in the final properties of the cured layers, like inferior visual appearance or crack formation. In additions, such state-of-the-art compositions must be applied in multiple application steps to achieve a useable self-levelling layer.

Another technical difficulty in applying the compositions of the state of the art is their lack in opacity, also called hiding power in the context of paints, the ability of a layer, especially in the case of the sealer layer, to hide the appearance of the layer below, which is an important aspect of an aesthetically pleasing appearance of the final product.

It is a long-standing need in the field to provide a "one-product fits all" solution of a composition, that can be used as the basis for all above mentioned layer types, primer-, scratch coat-, self-levelling and sealer layer. Such a composition would be used as a basis on the application site and, if necessary, could be diluted with tab water if needed when applied as a primer layer, complemented with a thixotropic agent if needed when applied as a scratch coat layer, sand could be added when applied as self-levelling layer and used "as is" if applied as sealer layer. Such a composition would make the need for multiple commercial products on the application site and storage/supply location redundant.

WO2020249751 discloses an epoxy composition for floor coatings including a waterborne hardener component, a resin component containing at least one liquid epoxy resin and mineral fillers, wherein the composition contains mineral fillers in the range of 85 to 95 weight-%, based on the total solids of the composition.

### Summary of the invention

The object of the invention was therefore that of providing a composition which can be used as the basis for all, primer-, scratch coat-, self-levelling and sealer layer, can be applied preferably in a single application step per layer, and provides an aesthetically pleasing appearance (visual appearance, surface characteristics and good opacity), good processibility and does not result in crack formation.

The object was surprisingly achieved by a multicomponent composition described hereinafter.

The invention therefore relates to a multicomponent composition comprising
A) a binder component (A) comprising at least one epoxy resin,
B) a curing component (B) comprising at least one amine functional adduct, which is a reaction product of
   (a) at least one polyether amine,
   (b) at least one polyalkylene amine,
   (c) at least one arylaliphatic or cycloaliphatic amine,
   (d) at least one polyether epoxy resin, and
   (e) at least one aromatic liquid epoxy resin.

The multicomponent composition contains 9 - 22% by weight of the at least one amine functional adduct, based on the total weight of the multicomponent composition.

The multicomponent composition contains 15 - 35% by weight of at least one filler, preferably an inorganic filler, based on the total weight of the multicomponent composition.

The term "polyamine" in the present document refers to compounds having at least two primary or secondary amino groups.

In the present document, a "primary" amino group refers to an NH₂ group bonded to one organic radical, and a "secondary" amino group refers to an NH group bonded to two organic radicals which may also together be part of a ring.

In the present document, "molecular weight" is understood to mean the molar mass (in grams per mole) of a molecule. "Average molecular weight" refers to the number-average molecular weight Mₙ of a polydisperse mixture of oligomeric or polymeric molecules, which is typically determined by means of GPC against polystyrene as standard.

The term "polyepoxide" in the present document refers to compounds having at least two epoxy groups. "Diepoxide" refers to compounds having two epoxy groups.

"Epoxide group" or "epoxy group" in the present document refers to the structural element

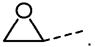

The term "polyether amine" refers to an amine functional polyether.

The term "polyalkylene amine" refers to a linear polyamine which contains at least three amine groups separated from each other by alkylene groups.

The term "arylaliphatic amine" refers to a molecule with an amine group which is connected to an aliphatic carbon atom of an arylaliphatic moiety.

The term "cycloaliphatic amine" refers to a molecule with an amine group which is connected to an aliphatic carbon atom of a cycloaliphatic moiety.

The term "solids" or "solids content" refers to the proportion of a composition, from which all the volatile ingredients, such as water or solvents, were evaporated. It can be determined arithmetically or by drying the composition in an infrared dryer or in a circulated air oven to a constant weight.

The term "amine hydrogen" refers to the hydrogens of primary and secondary amine groups.

The term "amine hydrogen equivalent weight" refers to the mass of an amine or an amine containing composition, which contains one mole equivalent of amine hydrogens.

In this document, the term "room temperature" refers to a temperature of 23°C. The term "pot life" refers to the time period, which a multi component composition can be applied after mixing of the components without defects. A typical measure of the pot life can be a doubling of the viscosity.

The abbreviation "EEW" in the present document stands for "epoxy equivalent weight".

"Glycidyl ether" in the present document refers to an ether of 2,3-epoxy-1-propanol (glycidol).

In this document, the term "opacity" refers to the property of a cured film/coating to hide the surface of the substrate the cured film/coating is applied onto, especially to obscure a background of contrasting color.

Preferred embodiments of the composition are given in the dependent claims. The invention is elucidated in detail hereinafter.

### Way of executing the invention

Compound names that begin with "poly" refer to substances that, in a formal sense, contain two or more of the functional groups that occur in their names per molecule. The compound may be monomeric, oligomeric or polymeric. A polyamine is, for example, a compound having two or more amino groups. A polyepoxide is a compound having two or more epoxy groups.

Epoxy resins are polyepoxides, i.e. compounds having two or more epoxy groups. Epoxy resins are preferably oligomeric or polymeric compounds. Epoxy resins are sometimes also used in conjunction with what are called reactive diluents. Reactive diluents are mono- or polyepoxides. The reactive diluents have a lower viscosity than the epoxy resin used and serve to reduce the viscosity of the epoxy resin used. The optional reactive diluent is likewise incorporated into the organic binder matrix and is therefore counted here among the epoxy resins for the determination of the organic binder content.

The epoxy equivalent weight (EEW) can be determined according to DIN 53188 and is reported in g/eq. The NH equivalent weight can be determined according to DIN 16945 and is reported in g/eq. The stoichiometric ratio of epoxy functionality to amine functionality is the quotient of epoxy equivalent weight to NH equivalent weight and is frequently reported in %. The NH equivalent weight is based here on the active NH hydrogens. A primary amine, for example, has two active NH hydrogens.

The composition of the invention is a multicomponent composition, i.e. the composition comprises multiple, especially two, individual components that are only mixed together on use. The components are stored separately before use in order to avoid spontaneous reaction. For use, the components are mixed with one another. After the mixing, organic crosslinking reactions commence, which ultimately lead to curing of the mixture.

The composition of the invention comprises a binder component (A) and a curing component (B). The composition may be preferably a two-component composition that consists solely of these two components. The composition may, however, if required, also include one or more further additional components. If, for example, the multicomponent composition of the invention, in the preferred embodiment, comprises pigments as colorants, these may be present in at least one of the two components (A) and (B) mentioned and/or in an additional pigment component (C). Preferably they are in the curing component (B).

It is clear that the proportion of a particular ingredient in the mixture of the components depends on the proportion of this ingredient in the component in question and the mixing ratio of the components. Proportions or ratios of particular ingredients that are specified here, unless stated otherwise, relate to the appropriate or suitable proportions by weight or weight ratios of the ingredients in the mixture of the components of the multicomponent composition. This is obtained, for example, by mixing the components in suitable mixing ratios according to use instructions.

The binder component (A) comprises at least one epoxy resin and optionally a reactive diluent. The binder component (A) is preferably a liquid component. It may be viscous but is generally pourable.

The binder component (A) comprises at least one epoxy resin. It is possible to use one epoxy resin or a mixture of two or more epoxy resins. Epoxy resins used may be any of the epoxy resins that are customary in epoxy chemistry. Epoxy resins can be prepared, for example, in a known manner from the oxidation of the corresponding olefins or from the reaction of epichlorohydrin with the corresponding polyols or polyphenols.

Epoxy resins can be subdivided into liquid epoxy resins and solid epoxy resins. The epoxy resin may have, for example, an epoxy equivalent weight of 156 to 500 g/eq. The epoxy resin is preferably a diepoxide.

In one embodiment, the epoxy resin may be an aromatic epoxy resin. Suitable examples for this purpose are liquid epoxy resins of the formula (III) 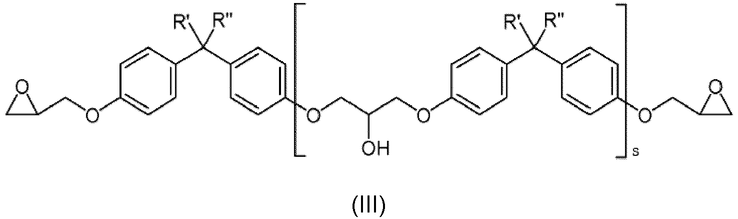 where R' and R" are each independently a hydrogen atom or a methyl group, and s has an average value of 0 to less than 2 and preferably 0 to 1. Preference is given to those liquid resins of the formula (III) in which the index s has an average value of less than 0.2.

The epoxy resins of the formula (III) are diglycidyl ethers of bisphenol A, bisphenol F and bisphenol A/F, where A stands for acetone and F for formaldehyde, which serve as reactants for preparation of these bisphenols. Such liquid epoxy resins are commercially available, for example, under the following names: Araldite^{®} from Huntsman, D.E.R.^{®} from Dow, Epikote^{®} from Momentive, Epalloy^{®} from CVC, Chem Res^{®} from Cognis or Beckopox^{®} from Cytec.

Further suitable aromatic epoxy resins are the glycidylization products of:
- dihydroxybenzene derivatives such as resorcinol, hydroquinone and catechol;
- further bisphenols or polyphenols such as bis(4-hydroxy-3-methylphenyl)methane, 2,2-bis(4-hydroxy-3-methylphenyl)propane (bisphenol C), bis(3,5-dimethyl-4-hydroxyphenyl)methane, 2,2-bis(3,5-dimethyl-4-hydroxyphenyl)propane, 2,2-bis(3,5-dibromo-4-hydroxyphenyl)propane, 2,2-bis(4-hydroxy-3-tert-butylphenyl)propane, 2,2-bis(4-hydroxyphenyl)butane (bisphenol B), 3,3-bis(4-hydroxyphenyl)pentane, 3,4-bis(4-hydroxyphenyl)hexane, 4,4-bis(4-hydroxyphenyl)heptane, 2,4-bis(4-hydroxyphenyl)-2-methylbutane, 2,4-bis(3,5-dimethyl-4-hydroxyphenyl)-2-methylbutane, 1,1-bis(4-hydroxyphenyl)cyclohexane (bisphenol Z), 1,1-bis(4-hydroxyphenyl)-3,3,5-trimethylcyclohexane (bisphenol TMC), 1,1-bis(4-hydroxyphenyl)-1-phenylethane, 1,4-bis[2-(4-hydroxyphenyl)-2-propyl]benzene (bisphenol P), 1,3-bis[2-(4-hydroxyphenyl)-2-propyl]benzene (bisphenol M), 4,4'-dihydroxydiphenyl (DOD), 4,4'-dihydroxybenzophenone, bis(2-hydroxynaphth-1-yl)methane, bis(4-hydroxynaphth-1-yl)methane, 1,5-dihydroxynaphthalene, tris(4-hydroxyphenyl)methane, 1,1,2,2-tetrakis(4-hydroxyphenyl)ethane, bis(4-hydroxyphenyl) ether, bis(4-hydroxyphenyl) sulfone;
- condensation products of phenols with formaldehyde that are obtained under acidic conditions, such as phenol novolaks or cresol novolaks;
- aromatic amines such as aniline, toluidine, 4-aminophenol, 4,4'-methylenediphenyldiamine (MDA), 4,4'-methylenediphenyldi(N-methyl)amine, 4,4'-[1,4-phenylenebis(1-methylethylidene)]bisaniline (bisaniline P), 4,4'-[1,3-phenylenebis(1-methylethylidene)]bisaniline (bisaniline M).

In a further embodiment, the epoxy resin may be an aliphatic or cycloaliphatic epoxy resin, for example
- diglycidyl ether;
- a glycidyl ether of a saturated or unsaturated, branched or unbranched, cyclic or open-chain C₂ to C₃₀ diol, for example ethylene glycol, propylene glycol, butylene glycol, hexanediol, octanediol, a polypropylene glycol, dimethylolcyclohexane, neopentyl glycol;
- a glycidyl ether of a tri- or tetrafunctional, saturated or unsaturated, branched or unbranched, cyclic or open-chain polyol such as castor oil, trimethylolpropane, trimethylolethane, pentaerythritol, sorbitol or glycerol, and alkoxylated glycerol or alkoxylated trimethylolpropane;
- a hydrogenated liquid bisphenol A, F or A/F resin, or the glycidylization products of hydrogenated bisphenol A, F or A/F;
- an N-glycidyl derivative of amides or heterocyclic nitrogen bases, such as triglycidyl cyanurate and triglycidyl isocyanurate, and reaction products of epichlorohydrin and hydantoin.

Further examples of usable epoxy resins are epoxy resins that have been prepared from the oxidation of olefins, for example from the oxidation of vinylcyclohexene, dicyclopentadiene, cyclohexadiene, cyclododecadiene, cyclododecatriene, isoprene, hexa-1,5-diene, butadiene, polybutadiene or divinylbenzene.

Further examples of usable epoxy resins are a solid bisphenol A, F or A/F resin that are formed in the same way as the aforementioned liquid epoxy resins of the formula (III) except that the index s has a value of 2 to 12. Further examples are all aforementioned epoxy resins that have been hydrophilically modified by reaction with at least one polyoxyalkylenepolyol.

Preferred epoxy resins are solid or liquid bisphenol A, F or A/F resins as commercially available, for example, from Dow, Huntsman and Momentive. Epoxy resins used are more preferably diepoxides of a bisphenol A diglycidyl ether, bisphenol F diglycidyl ether and bisphenol A/F diglycidyl ether, especially those having an epoxy equivalent weight of 156 to 250 g/eq, for example the commercial products Araldite^{®} GY 250, Araldite^{®} PY 304, Araldite^{®} GY 282 (from Huntsman); D.E.R. ^{®} 331, D.E.R. ^{®} 330 (from Dow); Epikote^{®} 828, Epikote^{®} 862 (from Momentive), and N,N-diglycidylaniline and a polyglycol diglycidyl ether, preferably having an epoxy equivalent weight of 170 to 340 g/eq., for example the commercial products D.E.R.^{®} 732 and D.E.R.^{®} 736 (from Dow).

It may be advantageous that the binder component (A) contains at least one reactive diluent. As stated, this is counted as part of the epoxy resin for the organic binder content. It is possible to use one or more reactive diluents. Suitable reactive diluents are mono- and polyepoxides. The addition of a reactive diluent to the epoxy resin brings about a reduction in viscosity and, in the cured state of the epoxy resin composition, a reduction in glass transition temperature and the mechanical values.

Examples of reactive diluents are glycidyl ethers of mono- or polyhydric phenols and aliphatic or cycloaliphatic alcohols, such as, in particular, the polyglycidyl ethers of di- or polyols that have already been mentioned as aliphatic or cycloaliphatic epoxy resins, and also, in particular, phenyl glycidyl ether, cresyl glycidyl ether, p-n-butylphenyl glycidyl ether, p-tert-butylphenyl glycidyl ether, nonylphenyl glycidyl ether, allyl glycidyl ether, butyl glycidyl ether, hexyl glycidyl ether, 2-ethylhexyl glycidyl ether, and glycidyl ethers of natural alcohols, for example Cs- to C₁₀-alkyl glycidyl ethers, C₁₂- to C₁₄-alkyl glycidyl ethers or C₁₃- to C₁₅-alkyl glycidyl ethers, commercially available as Erisys^{®} GE-7, Erisys^{®} GE-8 (from CVC) or as Epilox^{®} P 13 - 19 (from Leuna).

Preferably, the multicomponent composition, based on the total weight of the multicomponent composition, contains 20-45 % by weight, especially 25-40% by weight, preferably 27.5-37.5% by weight of binder component (A).

The curing component (B) comprises at least one amine functional adduct, which is a reaction product of
(a) at least one polyether amine,
(b) at least one polyalkylene amine,
(c) at least one arylaliphatic or cycloaliphatic amine,
(d) at least one polyether epoxy resin, and
(e) at least one aromatic liquid epoxy resin.

The amount of the at least one amine functional adduct is from 9 - 22 % by weight of the at least one amine functional adduct, based on the total weight of the multicomponent composition. An amount of less than 9 wt.-% has the disadvantage of insufficient opacity capacity of the cured composition. This can be seen, for example, in the comparison of the compositions E1 and E4-6 with Ref.1. An amount of more than 22 wt.-% has the disadvantage of insufficient opacity capacity of the cured composition as well as inferior visual appearance of the cured composition.

Preferably, the multicomponent composition contains 11- 20 % by weight, preferably 13 - 17.5 % by weight, of the at least one amine functional adduct, based on the total weight of the multicomponent composition. Said ranges have the advantage of an improved opacity capacity of the cured composition as well as better surface structure and visual appearance of the cured composition. This can be seen, for example, in the comparison of the compositions E1 with E4-6 and Ref.1.

The curing component (B) is preferably a liquid component. It may be viscous, but is generally pourable.

The amine functional adduct is based on (a) at least one polyether amine. The polyether amine enables a particularly low viscosity and low shrinkage.

Preferred are polyether amines which are free of secondary or tertiary amine groups and contain two or three, particularly two, primary amine groups.

Suitable polyether amines contain preferably repetitive units selected from 1,2-ethylenoxy, 1,2-propylenoxy, 1,3-propylenoxy, 1,2-butylenoxy and 1,4-butylenoxy.

Preferred are polyether amines with 1,2-ethylenoxy and/or 1,2-propylenoxy as repetitive units.

Particularly preferred are polyether amines containing only 1,2-propylenoxy as repetitive unit in the polyether chain. Such polyether amines are hydrophobic and enable a long pot life.

Preferred polyether amines have an average molecular weight Mₙ in the range of 200 to 5'000 g/mol, more preferred 200 to 2'000 g/mol, particularly 200 to 500 g/mol.

Most preferred is a polyoxypropylene diamine with an average molecular weight Mₙ in the range of 200 to 2'000 g/mol, preferably 200 to 500 g/mol. Such polyether amines are commercially available as Jeffamine^{®} D-230, Jeffamine^{®} D-400 or Jeffamine^{®} D-2000 (all from Huntsman), for example.

The amine functional adduct is further based on (b) at least one polyalkylene amine. The polyalkylene amine enables good pigment dispersion properties and a good stability of the hardener component with no separation.

Preferably the polyalkylene amine is an amine of the formula (I), 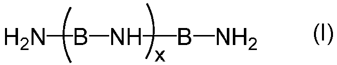 wherein
x is a whole number from 1 to 6, and
B is independently of each other a C₂ to C₆ alkylene group.

Such polyalkylene amines are typically used in a technical grade.

Suitable polyalkylene amines are particularly diethylenetriamine (DETA), triethylenetetramine (TETA), tetraethylenepentamine (TEPA), pentaethylenehexamine (PEHA), higher homologues of linearic polyethylene amines, dipropylenetriamine (DPTA), N-(2-aminoethyl)-1,3-propandiamine (N3-amine), N,N'-bis(3-aminopropyl)ethylenediamine (N4-amine), N,N'-bis(3-aminopropyl)-1,4-diaminobutane, N5-(3-aminopropyl)-2-methyl-1,5-pentandiamine, N3-(3-aminopentyl)-1,3-pentandiamine, N5-(3-amino-1-ethylpropyl)-2-methyl-1,5-pentandiamine, N,N'-bis(3-amino-1-ethylpropyl)-2-methyl-1,5-pentandiamine or bis(6-aminohexyl)amine (BHMT).

Preferably x is 2 or 3 or 4.

Preferably B is 1,2-ethylene and/or 1,3-propylene, particularly 1,2-ethylene.

A particularly preferred polyalkylene amine is TETA, TEPA, PEHA or N4-amine, particularly TETA, TEPA or PEHA. They enable a particularly good pigment wetting and a high cure rate. Most preferred is TEPA.

The amine functional adduct is further based on (c) at least one arylaliphatic or cycloaliphatic amine.

The arylaliphatic or cycloaliphatic amine has preferably two primary amine groups and is free from secondary or tertiary amine groups. It has preferably a molecular weight in the range of 100 to 300 g/mol.

Preferably, the arylaliphatic or cycloaliphatic amine has two primary amine groups and, apart from these, is free from further heteroatoms.

Suitable arylaliphatic or cycloaliphatic amines are particularly 1,2-diaminocyclohexane, 1,3-diaminocyclohexane, 1,4-diaminocyclohexane, 1,3-bis(aminomethyl)cyclohexane, 1,4-bis(aminomethyl)cyclohexane, bis(4-aminocyclohexyl)methane, 4-(4-aminocyclohexylmethyl)aniline, bis(4-amino-3-methylcyclohexyl)methane, bis(4-amino-3-ethylcyclohexyl)methane, bis(4-amino-3,5-dimethylcyclohexyl)methane, bis(4-amino-3-ethyl-5-methylcyclohexyl)methane, 1-amino-3-aminomethyl-3,5,5-trimethylcyclohexane (Isophoronediamine or IPDA), 2(4)-methyl-1,3-diaminocyclohexane, 2,5(2,6)-bis(aminomethyl)bicyclo[2.2.1]heptane (norbornanediamine or NBDA), 3(4),8(9)-bis(aminomethyl)tricyclo[5.2.1.0^{2,6}]-decane, 1,4-diamino-2,2,6-trimethylcyclohexane (TMCDA), 1,8-menthandiamine, 1,3-bis(aminomethyl)benzene (MXDA), 1,4-bis(aminomethyl)benzene, dimer fatty acid based amines such as Priamine^{®} 1071 or Priamine^{®} 1074 (both from Croda), or phenalkamines, for example reaction products of cardanol, formaldehyde and primary diamines, commercially available from Cardolite.

Preferably the arylaliphatic or cycloaliphatic amine is selected from the group consisting of 1,3-bis(aminomethyl)cyclohexane, 1,4-bis(aminomethyl)cyclohexane, 1-amino-3-aminomethyl-3,5,5-trimethylcyclohexane, 2(4)-methyl-1,3-diaminocyclohexane, 2,5(2,6)-bis(aminomethyl)bicyclo[2.2.1]heptane and 1,3-bis(aminomethyl)benzene. Particularly preferred thereof is 1-amino-3-aminomethyl-3,5,5-trimethylcyclohexane or 1,3-bis(aminomethyl)benzene. Most preferred is 1,3-bis(aminomethyl)benzene.

The preferred amines enable well balanced hydrophilic properties, a low viscosity and a high reactivity.

The amine functional adduct is further based on (d) at least one polyether epoxy resin. The polyether epoxy resin enables a good flow behavior and a high impact resistance.

Preferably the polyether epoxy resin has an average molecular weight Mₙ in the range of 200 to 2'000 g/mol, particularly 300 to 1'500 g/mol.

Suitable polyether epoxy resins are particularly polyethylene glycol diglycidylethers, polypropylene glycol diglycidylethers, polytetrahydrofurane diglycidylethers or mixtures thereof.

The polyether epoxy resin is preferably a polypropylene glycol diglycidylether.

Most preferred, the polyether epoxy resin is a technical grade of a polypropylene glycol diglycidylether with an epoxy equivalent weight in the range of 150 to 750 g/mol, particularly 300 to 500 g/mol.

Such polyether epoxy resins are commercially available, such as D.E.R. 732 or D.E.R. 736P (both from Dow), Grilonit^{®} F 704 (from EMS-Chemie) or Araldite^{®} DY-F (from Huntsman), for example.

It can be beneficial to use a mixture of two or more grades of polyether epoxy resins to get most balanced hydrophilic properties and a low viscosity in the adduct.

The amine functional adduct is further based on (e) at least one aromatic liquid epoxy resin.

The aromatic liquid epoxy resin is typically a technical grade of an aromatic polyepoxide resin with a glass transition temperature below 25°C. In contrast, solid epoxy resins have a glass transition temperature above 25°C and can be comminuted to powders.

Suitable aromatic liquid epoxy resins are glycidylethers of
- bisphenol A, bisphenol F or bisphenol A/F, wherein A means acetone and F means formaldehyde, which were used to produce these bisphenols. A technical grade of bisphenol F can also contain positional isomers, particularly derived from 2,4'- or 2,2'-hydroxyphenylmethan;
- resorcinol, hydroquinone or catechol; or
- other bisphenols.

Preferably the aromatic liquid epoxy resin is a bisphenol A and/or F diglycidylether. Such epoxy resins are available from Dow, Huntsman, Hexion, Allnex or Momentive, for example.

To make the adduct, it is possible to use other amines and/or other glycidyl ethers additionally to the ones already mentioned.

In a preferred embodiment of the invention, a solid aromatic epoxy resin is used additionally to the liquid aromatic epoxy resin. Preferably the solid aromatic epoxy resin is used in an amount in the range of 5 to 15 weight-% based on the total weight of all the epoxy-functional substances in the adduct.

In a further preferred embodiment of the invention, an epoxy-functional reactive diluent is used together with the liquid aromatic epoxy resin, particularly a diglycidylether of 1,4-butandiol, 1,6-hexandiol or 1,4-cyclohexane dimethanol, or a monoglycidylether of C₁₂ to C₁₄ alcohols, C₁₃ to C₁₅ alcohols, phenol, cresol or p-tert.butylphenol. This enables adducts with a particularly low viscosity. Preferred are diglycidylethers, particularly a technical grade of 1,6-hexandiol diglycidylether.

Bisphenol A and/or F diglycidlyethers, which contain a certain amount of reactive diluent, are commercially available.

The amine functional adduct is preferably made by reacting (a) the polyether amine, (b) the polyalkylene amine, (c) the arylaliphatic or cycloaliphatic amine and optionally further amine functional substances, with (d) the polyether epoxy resin, (e) the aromatic liquid epoxy resin and optionally further epoxy-functional substances, in such a way, that the ratio between the primary amine groups and the epoxy groups is more than 1.

Preferably the overall ratio between the primary amine groups and the epoxy groups in the reaction to form the amine functional adduct is in the range of 1.5 to 4, preferably 2 to 3. This ratio range aids a low viscosity adduct which cures to a coating with an even, glossy surface at ambient conditions.

The amine functional adduct is preferably made by reacting the amine group containing compounds with the epoxy group containing compounds at a temperature in the range of 15 to 120°C, preferably 40 to 100°C, more preferably 60 to 90°C. The chronological order of the reaction is free, as long as there is always an excess of primary amine groups to epoxy groups in the reaction mixture.

In a preferred embodiment, the amine functional adduct is made in a one pot reaction by mixing all the reactants together and letting them react in a temperature range between 50 to 130°C, preferably 60 to 100°C. It is preferred to premix the amines, optionally together with a solid epoxy resin, heat this mixture to at least 50°C and slowly add the polyether epoxy resin, the liquid aromatic epoxy resin and optionally reactive diluents under good stirring and temperature control. Such a one pot reaction is particularly easy and fast. It is possible to add a second step to the production process by reacting the amine functional adduct with a monoepoxide, such as p-tert.butylphenyl glycidylether, for example. Such a second step is possible, but not necessary to get the described good performance of the epoxy composition.

Preferably, the adduct is made in a one pot reaction in only one step. Such a process is particularly easy and fast.

Preferably, the weight ratio between the polyether epoxy resin and the liquid aromatic epoxy resin is in the range of 30/70 to 80/20, preferably 50/50 to 75/25.

Preferably, the weight ratio between the polyether amine and the polyalkylene amine is in the range of 30/70 to 80/20, preferably 50/50 to 75/25.

Preferably, the weight ratio between the arylaliphatic or cycloaliphatic amine and the combined polyether amine plus polyalkylene amine is in the range of 5/95 to 40/60, preferably 10/90 to 30/70.

The preferred weight ratios aid a low viscosity, well balanced hydrophilic and hydrophobic properties.

Preferably the adduct is diluted with a first portion of water after the reaction between the amines and the epoxy resins is finished. With this first portion of water, the adduct is preferably diluted to a solids content in the range of 55 to 90 weight-%, preferably 60 to 80 weight-%. Like this, the adduct is storage stable and easy to use as part of a waterborne hardener component for epoxy resins.

Preferably the waterborne hardener component contains further water.

It can be advantageous if the multicomponent composition contains at least one accelerator for the reaction between amines and epoxides, preferably in the curing component (B). Such accelerators for the reaction between amines and epoxides are particularly acids or substances which can be hydrolized to acids, particularly carbonic acids such as acetic acid, benzoic acid, salicylic acid, 2-nitrobenzoic acid, lactic acid, organosulfonic acids such as methanesulfonic acid, p-toluenesulfonic acid or 4-dodecylbenzenesulfonic acid, esters of sulfonic acids, other organic or anorganic acids such as phosphoric acid, or of the before mentioned acids and esters; nitrates such as particularly calcium nitrate; tertiary amines such as 1,4-diaza-bicyclo[2.2.2]octane, benzyldimethylamine, α-methylbenzyldimethylamine, triethanolamine, dimethylaminopropylamine, imidazoles such as N-methylimidazole, N-vinylimidazole or 1,2-dimethylimidazole, salts of such tertiary amines, quaternary ammonium salts such as benzyltrimethylammonium chloride, amidines such as 1,8-diazabicyclo[5.4.0]undec-7-en, guanidines such as 1,1,3,3-tetramethylguanidine, phenoles, such as bisphenols, phenolic resins or Mannich bases such as 2-(dimethylaminomethyl)phenol, 2,4,6-tris(dimethylaminomethyl)phenol or polymers from phenol, formaldehyde and N,N-dimethyl-1,3-propanediamine, phosphites such as di- or triphenylphosphite, or mercapto-functional compounds.

Preferably, the multicomponent composition, preferably in the curing component (B), contains 0.1 - 2.0 % by weight, preferably 0.2 - 1.0 % by weight, more preferably 0.4 - 0.8 % by weight, of at least one accelerator for the reaction between amines and epoxides, preferably selected from the list consisting of acids, nitrates, tertiary amines and Mannich bases, especially preferred selected from the list consisting of salicylic acid, calcium nitrate and 2,4,6-tris(dimethylaminomethyl)phenol, most preferred 2,4,6-tris(dimethylaminomethyl)phenol, based on the total weight of the multicomponent composition.

Additionally to the amine functional adduct, the curing component (B) may contain at least one further amine. However, it is preferred if the curing component (B) contains less than 10 wt.-%, preferably less than 5 wt.-%, more preferably less than 1 wt.-%, based on the total weight of the curing component (B), of at least one further amine, preferably selected from the group consisting of IPDA, MXDA and polyoxypropylene di- or -triamines with an average molecular weight Mₙ in the range of 200 to 500 g/mol. Most preferred, the curing component (B) is free of further amines.

The curing component (B) may optionally contain one or more further additives. Suitable additives are elucidated further down.

The multicomponent composition contains 15 -35 % by weight of at least one filler, preferably an inorganic filler, based on the total weight of the multicomponent composition. Preferably, the at least one filler, is contained in the curing component (B). An amount of less than 15 wt.-% has the disadvantage of an inferior surface structure and visual appearance of the cured composition. This can be seen, for example, in the comparison of the compositions E1 and E7-9 with Ref.2. An amount of more than 35 wt.-% has the disadvantage of significantly reduced workability.

Preferably, the multicomponent composition contains 17.5 - 32.5 % by weight, preferably 20 - 30 % by weight, of at least one filler, preferably an inorganic filler, based on the total weight of the multicomponent composition. Said ranges have the advantage of an improved workability as well as better surface structure and visual appearance of the cured composition. This can be seen, for example, in the comparison of the compositions E1 with E7-9 and Ref.2.

Said inorganic fillers are preferably selected from the list consisting of silicon compounds such as silicon dioxide, silicates and precipitated and fumed silicas; metal carbonates such as calcium carbonate or dolomite; metal sulfates such as calcium sulfate (gypsum) and barium sulfate; and clay minerals such as kaolin, glasses and ceramic materials, preferably silicon compounds, more preferably silicon dioxide, most preferred quartz flour.

Said silicon dioxide may, for example, be quartz, preferably in the form of quartz flour. The silicate may, for example, be talc, mica or wollastonite. The sulfate may, for example, be baryte (heavy spar, barium sulfate). It is also possible to use mixtures of different fillers and/or different fractions of a filler having different sizes. The fillers may take customary forms. More particularly, it is preferred to use powders.

The fillers used preferably have grain sizes, for example, of 1 µm to 200 µm, especially between 10 µm and 100 µm. The grain size of fillers can be ascertained by sieve analysis or by microscope analysis, preferably by microscope analysis.

The curing component (B) may also contain one or more additional additives. Examples are auxiliaries that are customary in the flooring industry, for example dispersing agents and wetting agents.

The multicomponent composition preferably contains 26.0 - 30.5 % by weight, preferably 27.0 - 30.0% by weight, more preferably 28.0 - 29.0 % by weight, of water, based on the total weight of the multicomponent composition. Said ranges have the advantage of an improved workability, an improved opacity capacity of the cured composition as well as a better visual appearance of the cured composition. This can be seen, for example, in the comparison of the compositions E1 with E2 and E3

It is further advantageous if the weight ratio of the water present in the binder component (A) to the water present in the curing component (B) is 0.4 - 1.1, preferably 0.5 - 0.9, most preferably 0.6 - 0.8.

The multicomponent composition preferably contains 2.75 - 15 % by weight, preferably 4 - 12 % by weight, more preferably 5 - 10 % by weight, most preferably 6 - 9 % by weight, of at least one pigment, preferably an inorganic pigment, based on the total weight of the multicomponent composition. Preferably the at least one pigment is present in the curing component (B). Said ranges have the advantage of an improved opacity capacity of the cured composition. This can be seen, for example, in the comparison of the compositions E1 and E10 with E11-12.

The pigments may be inorganic or organic pigments. Examples of inorganic pigments are titanium dioxide, carbon black, bismuth pigments, iron oxide pigments, chromium oxides, mixed phase oxide pigments, Prussian blue, ultramarine, cobalt pigments and chromate pigments. Examples of organic pigments are azo pigments and polycyclic pigments such as copper phthalocyanine, quinacridone, diketopyrrolopyrrole, perylene, isoindoline, dioxazine and indanthrone pigments.

Preferably, the multicomponent composition contains two or more different pigments. Preferably, one pigment thereof is titanium dioxide and the second or further piment is another pigment. It is preferred that the weight ratio of the total amount titanium dioxide to the total amount of the sum of the other pigments is from 2 - 35, preferably 5 - 30, more preferably 15 - 27.5.

It may also be advantageous if the stoichiometric ratio of amine functionality to epoxy functionality in the multicomponent composition is 0.90 : 1 - 1.30 : 1, preferably 1.00 : 1 - 1.20 : 1, more preferably 1.05 : 1 - 1.15 : 1

Further optional additives that may especially be present in the binder component (A) and/or in the curing component (B), but optionally also in one or more other components, are additives that are customarily used in this field, for example stabilizers against heat, light or UV radiation; flame-retardant substances and biocides.

The invention also relates to a method of producing a coating, preferably a floor coating, with an above-described multicomponent composition, wherein the method comprises the following method steps:
a) mixing the binder component (A) and the curing component (B),
b) applying the mixed composition obtained to a substrate,
c) optionally smoothing or deaerating the mixed composition applied
   and
d) curing the mixed composition applied in order to obtain the coating.

The applying of the mixed composition and the curing are advantageously affected, for example, at temperatures in the range from 5 to 40°C.

The above-mentioned multicomponent composition can be used in said method comprising the method steps a) - d) as the basis for different layer types; primer-, scratch coat-, self-levelling- and sealer layer.

If used as a primer layer (see Step I) below), if necessary, the multicomponent composition could be diluted with tab water.

The substrate the primer layer is applied to is preferably
- concrete, mortar, cement screed, fibre cement, brick, tile, plaster, gypsum, natural stone such as granite or marble, ceramic or glass;
- repair or leveling materials based on PCC (polymer-modified cement composition) or ECC (epoxy-modified cement composition);
most preferably concrete.

Preferably, the mixed composition is applied in liquid state within its pot life, typically by being poured onto the substrate, followed by being spread with a tool such as a squeegee, a notched trowel or a roller, to get the desired dry film thickness.

If applied as a scratch coat layer (see Step II) below), the multicomponent composition could be complemented with a thixotropic agent if necessary.

In cases where the substrate is rough, uneven and/or containing holes or gaps, the application of a scratch coat layer, typically on top of the primer layer, is advisable.

Said thixotropic agent are preferably selected from the group consisting of urea preparations, preferably solutions of a urea urethane in an aprotic solvent; fibers and inorganic colloidal substances, preferably clays, alkaline earth metal oxides, silica aerogel, pyrogenic silica and microcrystalline mineral silicates.

When applied as self-levelling layer (see Step III), additional inorganic filler, preferably sand, could be added. The additional inorganic filler is preferably quartz sand with a particle size in the range of 0.05 to 0.5 mm, preferably 0.1 to 0.3 mm.

Is the multicomponent composition applied as sealer layer (see Step IV), preferably no additional components are added to the multicomponent composition and it is applied "as is".

The above-mentioned multicomponent composition can be used as the basis for any of the above-mentioned building layers of a floor coating system and therefore has the potential to make the need for multiple commercial products on the application site and storage/supply location redundant. Hence a complete floor coating system consisting of the different layers mentioned above can be done with one single commercial product and the optional addition of water, thixotropic agent and sand respectively. As can be seen in table 5 of the experimental section, a significant amount of sand can be added to the mixed multicomponent composition while still obtaining an aesthetically pleasing appearance (visual appearance, surface characteristics and good opacity) as well as good processibility. Table 6 of the experimental section shows that the mixed multicomponent composition can be applied to a thickness of more than 3 mm without any crack formation.

It is therefore preferred if the method comprises the following method steps:
Step I) comprising the steps a) - d), wherein optionally before or during, preferably during, step a) additional water, preferably additional water in an amount of 1 - 20 % of weight, more preferably 5 - 10 % of weight, based on the to the mixture obtained in step a), is added, preferably while stirring, in order to obtain a mixed composition;
Optionally step II) comprising the steps a) - d), wherein optionally before or during, preferably during, step a) thixotropic agents, preferably thixotropic agents in an amount of 0.5 - 5 % of weight, more preferably 1 - 3 of weight, based on the to the mixture obtained in step a) is added, preferably while stirring, in order to obtain a mixed composition;
Optionally step III) comprising the steps a) - d), wherein optionally before, during or after, preferably after (but before step b)), step a) additional inorganic filler, preferably sand, preferably in 80 - 150 % of weight, based on the to the mixture obtained in step a) is added, preferably while stirring, in order to obtain a mixed composition;
Step VI) comprising the steps a) - d), wherein preferably before or during, preferably during, step a) no additional components are added to the mixture obtained in step a), in order to obtain a mixed composition.

It is further preferred if in the following method steps:
Step I) after step d) a coating with a thickness of 0.05 - 0.2 mm, preferably 0.1 - 0.15 mm, is obtained; and
Optional step II) after step d) a coating with a thickness of 0.15 - 0.5 mm, preferably 0.25 - 0.35 mm, is obtained; and
Optional step III) after step d) a coating with a thickness of 0.8 - 3.5 mm, preferably 1.0 - 2.5 mm, is obtained; and
Step IV) after step d) a coating with a thickness of 0.1 - 0.8 mm, preferably 0.2 - 0.4 mm, is obtained.

Preferably, in all the mentioned method steps Step I) - Step IV), a multicomponent composition is used that contains the same components and amount thereof, based on the total weight of the multicomponent composition, not taking in account the optionally added components before step b) in the method steps Step I) - Step IV). This allows the creation of a complete floor coating system consisting of the different layers mentioned above with one single commercial product and the optional addition of water, thixotropic agent and sand respectively.

The invention also relates to a coating, especially floor coating, obtainable by the process described above.

The invention also relates to use of an above-described multicomponent composition as coating, especially floor coating.

### Examples

The following examples illustrate the present invention without being limiting. "AHEW" means amine hydrogen equivalent weight.

"EEW" means epoxy group equivalent weight.

Chemical substances not otherwise specified are from Sigma-Aldrich Chemie GmbH.

The viscosity was determined by a Brookfield viscometer with spindle number 3 at speed number 5.

### Preparation of the amine functional adduct:

### Used substances:

| | |
|---|---|
| Jeffamine^{®} D-400: | polyoxypropylene diamine, average molecular weight Mₙ 430 g/mol, AHEW 115 g/mol, equivalent weight per primary amine group 230 g/mol, from Huntsman |
| TEPA: | tetraethylene pentamine, AHEW 30 g/mol, equivalent weight per primary amine group 95 g/mol, technical grade, from Huntsman |
| MXDA: | 1,3-bis(aminomethyl)cyclohexane, AHEW 34 g/mol, equivalent weight per primary amine group 68 g/mol, from Mitsubishi Gas Chem. |
| Grilonit^{®} F 704: | polypropylene glycol diglycidylether, EEW 330 g/mol, from EMS-Chemie |
| Araldite^{®} DY-F: | polypropylene glycol diglycidylether, EEW 475 g/mol, from Huntsman |
| D.E.R.^{™} 358: | Bisphenol A/F diglycidylether containing hexandiol diglycidylether, EEW 180 g/mol, from Dow |
| Beckopox^{®} EP 384w: | solid epoxy resin dispersed in water, solids content 60 weight-%, EEW 980 g/mol (including water), from Allnex |
| Araldite^{®} DY-P: | p-tert.butylphenyl glycidylether, EEW 233 g/mol, from Huntsman |

### Adduct B1:

20.33 wpt Jeffamine^{®} D-400, 9.93 weight-parts (wpt) TEPA, 5.92 wpt MXDA and 4.59 wpt Beckopox^{®} EP 384w were put in a round bottom flask and heated to 70°C. Then, a premix of 6.16 wpt Grilonit^{®} F 704, 13.62 wpt Araldite^{®} DY-F and 11.29 wpt D.E.R.^{™} 358 was slowly added under good stirring and the temperature in the flask was kept below 85°C. Afterwards, the reaction mixture was held at 80 to 85°C during 2 hours, followed by the addition of 26.14 wpt tap water and 2.02 wpt acetic acid, each under good stirring. The obtained amine functional adduct was cooled to room temperature. It had a solids content of 72 weight-%, a viscosity at 20°C of 3.5 Pa·s, a calculated AHEW of 176.3 g/eq and a clear, yellowish aspect.

**Table 1: Composition (in weight parts) and features of the adduct B1**

| **Adduct** | | **B1** |
|---|---|---|
| (a) Jeffamine^{®} D-400 | | 20.33 |
| (b) TEPA | | 9.93 |
| (c) MXDA | | 5.92 |
| | Beckopox^{®} EP 384w | 4.59 |
| (d) Grilonit^{®} F 704 | | 6.16 |
| (d) Araldite^{®} DY-F | | 13.62 |
| (e) D.E.R.^{™} 358 | | 11.29 |
| | Araldite^{®} DY-P | 0 |
| | tap water | 26.14 |
| | acetic acid | 2.02 |
| viscosity at 20°C [Pa.s] | | 3.5 |
| AHEW (calc.) [g/mol] | | 176.3 |
| water content [wt-%] | | 28 |

### Preparation of the two-component compositions:

### Used substances:

**Table 2**

| Water | Tab water |
|---|---|
| K54 | Ancamine^{®} K54, 2,4,6-Tris(dimethylaminomethyl)phenol, from Evonik |
| Dispersants | Dispersants |
| Wetting agents | Wetting agents |
| Filler | Quarz flour |
| Pigment 1 | Titanium dioxide |
| Pigment 2 | NOVAPINT E CX10, oxide black pigment |
| Epoxy resin | Liquid bisphenol A epoxy resin, EEW 187,9 g/mol |
| Epoxy resin mix | Mixture (1:1) liquid bisphenol A/F epoxy resin, EEW 177,1 g/mol |
| Emulsifier | fatty alcohol ethoxylate |
| Reactive diluent | C12/C14-alkyl glycidyl ether |

Two-component compositions were formulated according to table 3 below. Table 4, 5 and 6 shows the experimental results.

### Preparation of component B:

To an initial charge of water in a suitable vessel are added the further raw materials as shown in table 2 with stirring by dissolver.

### Preparation of the mixed compositions:

Components A and B are mixed with a paddle stirrer for 3 minutes. All the compositions have a stoichiometric ratio of amine functionality to epoxy functionality of 1.11 : 1.0. The mixed compositions **E1-E12** and **Ref.1- Ref.2** were tested as follows:

### Workability (at 23 °C (RT))

Workability is determined immediately after mixture (called "Workability (immediately)") and 20 minutes after mixture (called "Workability (after 20 min)")) by the user during application. The crucial factor is the resistance with which the coating can be distributed. The aim is to be able to apply a 2 mm-thick layer with proportionate expenditure of force and in appropriate time with a toothed spatula. The reference is a self-levelling coating system available on the market and the application properties thereof.

The following scale was used:
very good = surface is level without the help of a roller.
good = to level the surface little help of a roller was needed.
moderate = to level the surface moderate help of a roller was needed.
insufficient = very difficult to level the surface using a roller.

### Visual appearance (at 23 °C (RT))

The visual appearance of the coatings applied by methods described above is assessed (toothed spatula, layer of thickness 2 mm, 23°C).

An important aspect for the assessment is how uniformly the surface has cured. Disadvantageous surface defects that are considered in this respect are spots, graininess of the surface, remaining waves and the resulting disturbed appearance of the surface and pinholes. Pinholes refer to small holes that remain in the surface.

The following scale was used:
very good = flawless surface
good = surface with minor imperfections
moderate = surface with some remaining roller marks that a slightly visible.
insufficient = uneven surface with many remaining roller marks that a clearly visible.

### Addition of different amounts of sand for assessment of obtained self-levelling layers

As can be seen in table 5, different amounts of sand (Silica sand, 0,1 - 0,3 mm) was added to the mixed composition E1 and mixed in with a paddle stirrer for 1.5 minutes. The mixed compositions were applied with the help of a toothed spatula, layer of thickness 1-3 mm (depending on the amount of silica sand added), 23°C and cured. The obtained coatings were assessed for workability and visual appearance as described above.

### Crack formation

The crack formation in the samples A-D of table 6 was assessed. Different amounts of composition E1 was applied by the method described above (toothed spatula, resulting layer of thickness as indicated in table 6 in mm, 23°C) and the cured composition was analysed with respect to crack formation. The appearance of cracks is rated as "yes" or "no" under "Crack formation".

It was surprisingly found that the composition E1 could be applied in an amount of 7000 g/m² without crack formation.

### Measurement of gloss

Gloss was measured based on EN ISO 2813 at an angle of incidence of 85°. All samples had a film thickness of 2 mm after curing at 23°C and 50% relative air humidity for 24 h.

The following scale was used:
5 = 80-100
4 = 65 - 80
3 = 50-65
2 = 30-50
1 = 0-30

### Opacity

Samples for measuring the colour and the evaluation of the opacity were prepared by applying the coating on a black/white contrast carton card with a film applicator.

Mixed compositions were prepared as described above and applied on the black/white contrast carton card that was placed on a plane surface. With the help of a film applicator in a slow and steady fashion, the mixed composition was distributed evenly to obtain a wet layer-thickness of 200 µm on the black/white contrast carton card at 23°C and 50% relative air humidity.

The following scale was used to quantify opacity:
very good = Substrate/ White-black contrast card was **not seen** underneath the coating with a wet thickness layer of 200 µm.
good = Substrate/ White-black contrast card was **slightly seen** underneath the coating with a wet thickness layer of 200 µm.
moderate = Substrate/ White-black contrast card was **moderately seen** underneath the coating with a wet thickness layer of 200 µm.
insufficient = Substrate/ White-black contrast card **was seen clearly** underneath the coating with a wet thickness layer of 200 µm.

**Table 3**

| | **E1** | **E2** | **E3** | **E4** | **E5** | **E6** | **Ref.1** | **Ref.2** | **E7** | **E8** | **E9** | **E10** | **E11** | **E12** |
|---|---|---|---|---|---|---|---|---|---|---|---|---|---|---|
| **Component B** | | | | | | | | | | | | | | |
| Adduct B1 | 22.56 | 22.56 | 22.56 | 25.20 | 17.72 | 14.61 | 11.72 | 22.56 | 22.56 | 22.56 | 22.56 | 22.56 | 22.56 | 22.56 |
| Water | 10.60 | 6.80 | 13.61 | 10.60 | 10.60 | 10.60 | 10.60 | 10.60 | 10.60 | 10.60 | 10.60 | 10.60 | 10.60 | 10.60 |
| K54 | 0.54 | 0.54 | 0.54 | 0.54 | 0.54 | 0.54 | 0.54 | 0.54 | 0.54 | 0.54 | 0.54 | 0.54 | 0.54 | 0.54 |
| Dispersant | 1.21 | 1.21 | 1.21 | 1.21 | 1.21 | 1.21 | 1.21 | 1.21 | 1.21 | 1.21 | 1.21 | 1.21 | 1.21 | 1.21 |
| Wetting agent | 1.14 | 1.14 | 1.14 | 1.14 | 1.14 | 1.14 | 1.14 | 1.14 | 1.14 | 1.14 | 1.14 | 1.14 | 1.14 | 1.14 |
| Filler | 22.49 | 22.49 | 22.49 | 17.66 | 31.38 | 37.09 | 42.38 | 0.00 | 30.74 | 34.00 | 40.80 | 22.49 | 22.49 | 22.49 |
| Pigment 1 | 8.16 | 8.16 | 8.16 | 8.16 | 8.16 | 8.16 | 8.16 | 8.16 | 8.16 | 8.16 | 8.16 | 5.10 | 3.40 | 1.70 |
| Water | 0.62 | 0.62 | 0.62 | 0.62 | 0.62 | 0.62 | 0.62 | 0.62 | 0.62 | 0.62 | 0.62 | 0.62 | 0.62 | 0.62 |
| Pigment 2 | 0.68 | 0.68 | 0.68 | 0.68 | 0.68 | 0.68 | 0.68 | 0.68 | 0.68 | 0.68 | 0.68 | 0.68 | 0.68 | 0.68 |

| **Component A** | | | | | | | | | | | | | | |
|---|---|---|---|---|---|---|---|---|---|---|---|---|---|---|
| Epoxy resin | 7.50 | 7.50 | 7.50 | 8.38 | 5.89 | 4.86 | 3.90 | 7.50 | 7.50 | 7.50 | 7.50 | 7.50 | 7.50 | 7.50 |
| Epoxy resin mix | 11.33 | 11.33 | 11.33 | 12.66 | 8.90 | 7.34 | 5.89 | 11.33 | 11.33 | 11.33 | 11.33 | 11.33 | 11.33 | 11.33 |
| Emulsifier | 0.40 | 0.40 | 0.40 | 0.40 | 0.40 | 0.40 | 0.40 | 0.40 | 0.40 | 0.40 | 0.40 | 0.40 | 0.40 | 0.40 |
| Reactive diluent | 1.23 | 1.23 | 1.23 | 1.23 | 1.23 | 1.23 | 1.23 | 1.23 | 1.23 | 1.23 | 1.23 | 1.23 | 1.23 | 1.23 |
| Water | 11.53 | 11.53 | 11.53 | 11.53 | 11.53 | 11.53 | 11.53 | 11.53 | 11.53 | 11.53 | 11.53 | 11.53 | 11.53 | 11.53 |
| **Total:** | 99.99 | 96.19 | 103.00 | 100.00 | 100.00 | 100.00 | 100.00 | 77.50 | 108.24 | 111.50 | 118.30 | 96.93 | 95.23 | 93.53 |
| Water (% total composition) | 28.6 | 25.8 | 30.7 | 29.3 | 27.4 | 26.5 | 25.8 | 36.9 | 26.4 | 25.7 | 24.2 | 29.5 | 30.0 | 30.6 |
| Hardener (% total composition) | 16.2 | 16.9 | 15.8 | 18.1 | 12.8 | 10.5 | 8.4 | 21.0 | 15.0 | 14.6 | 13.7 | 16.8 | 17.1 | 17.4 |
| Pigment (% total composition) | 8.8 | 9.2 | 8.6 | 8.8 | 8.8 | 8.8 | 8.8 | 11.4 | 8.2 | 7.9 | 7.5 | 6.0 | 4.3 | 2.5 |

**Table 4**

| | **E1** | **E2** | **E3** | **E4** | **E5** | **E6** | **Ref.1** | **Ref.2** | **E7** | **E8** | **E9** | **E10** | **E11** | **E12** |
|---|---|---|---|---|---|---|---|---|---|---|---|---|---|---|
| Workability (immediately) | very good | good | good | very good | very good | very good | very good | moderate | very good | very good | moderate | very good | very good | very good |
| Workability (after 20min) | very good | moderate | good | very good | very good | very good | very good | moderate | very good | very good | moderate | very good | very good | very good |
| Opacity | very good | good | good | good | moderate | moderate | Insufficient | - | - | - | - | very good | moderate | Insufficient |
| Gloss | 5 | 2 | 5 | 5 | 5 | 3 | 4 | 4 | 5 | 1 | 1 | 5 | 5 | 5 |
| Visual appearance | very good | moderate | good | very good | good | moderate | Insufficient | Insufficient | very good | good | good | very good | good | good |

**Table 5**

| | **E13** | **E14** | **E15** | **E16** |
|---|---|---|---|---|
| | Weight (g) | Weight (g) | Weight (g) | Weight (g) |
| Composition E1 | 100 | 100 | 100 | 100 |
| Sand | 50 | 120 | 150 | 200 |
| Weight ratio (E1/Sand) | 1:0.5 | 1:1.2 | 1:1.5 | 1:2 |
| Workability (immediately) | very good | very good | very good | moderate |
| Workability (after 20min) | very good | very good | very good | moderate |
| Opacity | very good | very good | very good | very good |
| Visual appearance | very good | very good | very good | moderate |

**Table 6, * = properties were not determined (n.d.) since the applied amount was too high to be successfully applied according to the method described above.**

| | **Sample A** | **Sample B** | **Sample C** | **Sample D** |
|---|---|---|---|---|
| Amount Composition E1 (g/m²) | 150 | 500 | 7000 | >10000 |
| Obtained thickness (mm) | 0.2 | 0.5 | 3 | n.d.* |
| Crack formation | no | no | no | n.d.* |

## Claims

1. A multicomponent composition comprising
A) a binder component (A) comprising at least one epoxy resin,
B) a curing component (B) comprising at least one amine functional adduct, which is a reaction product of
(a) at least one polyether amine,
(b) at least one polyalkylene amine,
(c) at least one arylaliphatic or cycloaliphatic amine,
(d) at least one polyether epoxy resin, and
(e) at least one aromatic liquid epoxy resin,
**characterized in that**
- the multicomponent composition contains 9 - 22% by weight of the at least one amine functional adduct, based on the total weight of the multicomponent composition, and
- the multicomponent composition contains 15 - 35% by weight of at least one filler, preferably an inorganic filler, based on the total weight of the multicomponent composition.

2. The multicomponent composition as claimed in claim 1, **characterized in that** the multicomponent composition contains 26.0 - 30.5 % by weight, preferably 27.0 - 30.0% by weight, more preferably 28.0 - 29.0 % by weight, of water, based on the total weight of the multicomponent composition.

3. The multicomponent composition as claimed in either of the preceding claims, **characterized in that** the multicomponent composition contains 11- 20 % by weight, preferably 13 - 17.5 % by weight, of the at least one amine functional adduct, based on the total weight of the multicomponent composition.

4. The multicomponent composition as claimed in either of the preceding claims, **characterized in that** the multicomponent composition contains 17.5 - 32.5 % by weight, preferably 20 - 30 % by weight, of at least one filler, preferably an inorganic filler, based on the total weight of the multicomponent composition.

5. The multicomponent composition as claimed in either of the preceding claims, **characterized in that** the multicomponent composition contains 2.75 - 15 % by weight, preferably 4 - 12 % by weight, more preferably 5 - 10 % by weight, most preferably 6 - 9 % by weight, of at least one pigment, preferably an inorganic pigment, based on the total weight of the multicomponent composition.

6. The multicomponent composition as claimed in either of the preceding claims, **characterized in that** the polyether amine is a polyoxypropylene diamine with an average molecular weight Mn in the range of 200 to 2'000 g/mol, preferably 200 to 500 g/mol, measured as indicated in the specification.

7. The multicomponent composition as claimed in either of the preceding claims, **characterized in that** the polyalkylene amine is an amine of the formula (I), 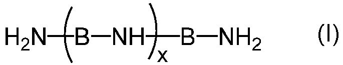 wherein
x is a whole number from 1 to 6, and
B is independently of each other a C₂ to C₆ alkylene group.

8. The multicomponent composition as claimed in either of the preceding claims, **characterized in that** the arylaliphatic or cycloaliphatic amine has two primary amine groups, is free from secondary or tertiary amine groups and has a molecular weight in the range of 100 to 300 g/mol.

9. The multicomponent composition as claimed in either of the preceding claims, **characterized in that** the weight ratio of the water present in the binder component (A) to the water present in the curing component (B) is 0.4 - 1.1, preferably 0.5 - 0.9, most preferably 0.6 - 0.8.

10. The multicomponent composition as claimed in any of the preceding claims, **characterized in that** the multicomponent composition, based on the total weight of the multicomponent composition, contains 20-45 % by weight, especially 25-40% by weight, preferably 27.5-37.5% by weight of binder component (A).

11. The multicomponent composition as claimed in any of the preceding claims, **characterized in that** the stoichiometric ratio of amine functionality to epoxy functionality is 0.90 : 1 - 1.30 : 1, preferably 1.00 : 1 - 1.20 : 1, more preferably 1.05 : 1 - 1.15 : 1.

12. The multicomponent composition as claimed in either of the preceding claims, **characterized in that** the multicomponent composition contains 0.1 - 2.0 % by weight, preferably 0.2 - 1.0 % by weight, more preferably 0.4 - 0.8 % by weight, of at least one accelerator for the reaction between amines and epoxides, preferably selected from the list consisting of acids, nitrates, tertiary amines and Mannich bases, especially preferred selected from the list consisting of salicylic acid, calcium nitrate and 2,4,6-tris(dimethylaminomethyl)phenol, most preferred 2,4,6-tris(dimethylaminomethyl)phenol, based on the total weight of the multicomponent composition.

13. A method of producing a coating, preferably a floor coating, with a multicomponent composition as claimed in any of claims 1 to 12, wherein the method comprises the following method steps:
a) mixing the binder component (A) and the curing component (B),
b) applying the mixed composition obtained to a substrate,
c) optionally smoothing or deaerating the mixed composition applied and
d) curing the mixed composition applied in order to obtain the coating.

14. The method according to claim 13, wherein the method comprises the following method steps:
Step I) comprising the steps a) - d), wherein optionally before or during, preferably during, step a) additional water, preferably additional water in an amount of 1 - 20 % of weight, more preferably 5 - 10 % of weight, based on the to the mixture obtained in step a), is added, preferably while stirring, in order to obtain a mixed composition;
Optionally step II) comprising the steps a) - d), wherein optionally before or during, preferably during, step a) thixotropic agents, preferably thixotropic agents in an amount of 0.5 - 5 % of weight, more preferably 1 - 3 of weight, based on the to the mixture obtained in step a) is added, preferably while stirring, in order to obtain a mixed composition;
Optionally step III) comprising the steps a) - d), wherein optionally before, during or after, preferably after (but before step b)), step a) additional inorganic filler, preferably sand, preferably in 80 - 150 % of weight, based on the to the mixture obtained in step a) is added, preferably while stirring, in order to obtain a mixed composition;
Step VI) comprising the steps a) - d), wherein preferably before or during, preferably during, step a) no additional components are added to the mixture obtained in step a), in order to obtain a mixed composition.

15. The method according to claim 14, wherein in the following method steps:
Step I) after step d) a coating with a thickness of 0.05 - 0.2 mm, preferably 0.1 - 0.15 mm, is obtained; and
Optional step II) after step d) a coating with a thickness of 0.15 - 0.5 mm, preferably 0.25 - 0.35 mm, is obtained; and
Optional step III) after step d) a coating with a thickness of 0.8 - 3.5 mm, preferably 1.0 - 2.5 mm, is obtained; and
Step IV) after step d) a coating with a thickness of 0.1 - 0.8 mm, preferably 0.2 - 0.4 mm, is obtained.

16. The method according to claims 14 - 15, wherein in all the method steps Step I) - Step IV) a multicomponent composition is used that contains the same components and amount thereof, based on the total weight of the multicomponent composition, not taking in account the optionally added components before step b) in the method steps Step I) - Step IV).

17. A coating, especially floor coating, obtainable by a method as claimed in claims 13 - 16.

## Patentansprüche

1. Mehrkomponentenzusammensetzung umfassend:
A) eine Bindemittelkomponente (A) umfassend wenigstens ein Epoxidharz,
B) eine Härtungskomponente (B) umfassend wenigstens ein aminfunktionelles Addukt, das ein Reaktionsprodukt ist von
(a) wenigstens einem Polyetheramin,
(b) wenigstens einem Polyalkylenamin,
(c) wenigstens einem arylaliphatischen oder cycloaliphatischen Amin,
(d) wenigstens einem Polyetherepoxidharz und
(e) wenigstens einem aromatischen flüssigen Epoxidharz,
**dadurch gekennzeichnet, dass**
- die Mehrkomponentenzusammensetzung 9-22 Gew.-% an dem wenigstens einen aminfunktionellen Addukt, bezogen auf das Gesamtgewicht der Mehrkomponentenzusammensetzung, enthält und
- die Mehrkomponentenzusammensetzung 15-35 Gew.-% an wenigstens einem Füllstoff, vorzugsweise einem anorganischen Füllstoff, bezogen auf das Gesamtgewicht der Mehrkomponentenzusammensetzung, enthält.

2. Mehrkomponentenzusammensetzung nach Anspruch 1, **dadurch gekennzeichnet, dass** die Mehrkomponentenzusammensetzung 26,0-30,5 Gew.-%, vorzugsweise 27,0-30,0 Gew.-%, bevorzugter 28,0-29,0 Gew.-%, Wasser, bezogen auf das Gesamtgewicht der Mehrkomponentenzusammensetzung, enthält.

3. Mehrkomponentenzusammensetzung nach einem der vorstehenden Ansprüche, **dadurch gekennzeichnet, dass** die Mehrkomponentenzusammensetzung 11-20 Gew.-%, vorzugsweise 13-17,5 Gew.-%, an dem wenigstens einen aminfunktionellen Addukt, bezogen auf das Gesamtgewicht der Mehrkomponentenzusammensetzung, enthält.

4. Mehrkomponentenzusammensetzung nach einem der vorstehenden Ansprüche, **dadurch gekennzeichnet, dass** die Mehrkomponentenzusammensetzung 17,5-32,5 Gew.-%, vorzugsweise 20-30 Gew.-%, an wenigstens einem Füllstoff, vorzugsweise einem anorganischen Füllstoff, bezogen auf das Gesamtgewicht der Mehrkomponentenzusammensetzung, enthält.

5. Mehrkomponentenzusammensetzung nach einem der vorstehenden Ansprüche, **dadurch gekennzeichnet, dass** die Mehrkomponentenzusammensetzung 2,75-15 Gew.-%, vorzugsweise 4-12 Gew.-%, bevorzugter 5-10 Gew.-%, höchst bevorzugt 6-9 Gew.-%, an wenigstens einem Pigment, vorzugsweise einem anorganischen Pigment, bezogen auf das Gesamtgewicht der Mehrkomponentenzusammensetzung, enthält.

6. Mehrkomponentenzusammensetzung nach einem der vorstehenden Ansprüche, **dadurch gekennzeichnet, dass** das Polyetheramin ein Polyoxypropylendiamin mit einem mittleren Molekulargewicht Mn in dem Bereich von 200 bis 2.000 g/mol, vorzugsweise 200 bis 500 g/mol, gemessen wie in der Beschreibung angegeben, ist.

7. Mehrkomponentenzusammensetzung nach einem der vorstehenden Ansprüche, **dadurch gekennzeichnet, dass** das Polyalkylenamin ein Amin der Formel (I) ist, 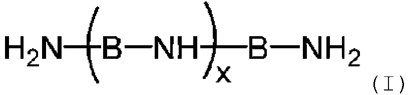 wobei
x eine ganze Zahl von 1 bis 6 ist, und
B unabhängig voneinander eine C₂- bis C₆-Alkylengruppe ist.

8. Mehrkomponentenzusammensetzung nach einem der vorstehenden Ansprüche, **dadurch gekennzeichnet, dass** das arylaliphatische oder cycloaliphatische Amin zwei primäre Amingruppen aufweist, frei von sekundären oder tertiären Amingruppen ist und ein Molekulargewicht in dem Bereich von 100 bis 300 g/mol aufweist.

9. Mehrkomponentenzusammensetzung nach einem der vorstehenden Ansprüche, **dadurch gekennzeichnet, dass** das Gewichtsverhältnis des in der Bindemittelkomponente (A) enthaltenen Wassers zu dem in der Härtungskomponente (B) enthaltenen Wasser 0,4-1,1, vorzugsweise 0,5-0,9, höchst bevorzugt 0,6-0,8, beträgt.

10. Mehrkomponentenzusammensetzung nach einem der vorstehenden Ansprüche, **dadurch gekennzeichnet, dass** die Mehrkomponentenzusammensetzung, bezogen auf das Gesamtgewicht der Mehrkomponentenzusammensetzung, 20-45 Gew.-%, insbesondere 25-40 Gew.-%, vorzugsweise 27,5-37,5 Gew.-%, Bindemittelkomponente (A) enthält.

11. Mehrkomponentenzusammensetzung nach einem der vorstehenden Ansprüche, **dadurch gekennzeichnet, dass** das stöchiometrische Verhältnis von Aminfunktionalität zu Epoxidfunktionalität 0,90: 1-1,30: 1 beträgt, vorzugsweise 1,00: 1-1,20: 1, bevorzugter 1,05: 1-1,15: 1.

12. Mehrkomponentenzusammensetzung nach einem der vorstehenden Ansprüche, **dadurch gekennzeichnet, dass** die Mehrkomponentenzusammensetzung 0,1-2,0 Gew.-%, vorzugsweise 0,2-1,0 Gew.-%, bevorzugter 0,4-0,8 Gew.-%, an wenigstens einem Beschleuniger für die Reaktion zwischen Aminen und Epoxiden enthält, vorzugsweise ausgewählt aus der Liste bestehend aus Säuren, Nitraten, tertiären Aminen und Mannich-Basen, besonders bevorzugt ausgewählt aus der Liste bestehend aus Salicylsäure, Calciumnitrat und 2,4,6-Tris(dimethylaminomethyl)phenol, höchst bevorzugt 2,4,6-Tris(dimethylaminomethyl)phenol, bezogen auf das Gesamtgewicht der Mehrkomponentenzusammensetzung.

13. Verfahren zur Herstellung einer Beschichtung, vorzugsweise einer Bodenbeschichtung, mit einer Mehrkomponentenzusammensetzung nach einem der Ansprüche 1 bis 12, wobei das Verfahren die folgenden Verfahrensschritte umfasst:
a) Mischen der Bindemittelkomponente (A) und der Härtungskomponente (B),
b) Aufbringen der erhaltenen gemischten Zusammensetzung auf ein Substrat,
c) gegebenenfalls Glätten oder Entlüften der aufgebrachten gemischten Zusammensetzung und
d) Härten der aufgebrachten gemischten Zusammensetzung, um die Beschichtung zu erhalten.

14. Verfahren nach Anspruch 13, wobei das Verfahren die folgenden Verfahrensschritte umfasst:
Schritt I) umfassend die Schritte a)-d), wobei gegebenenfalls vor oder während, vorzugsweise während, Schritt a) zusätzliches Wasser, vorzugsweise zusätzliches Wasser in einer Menge von 1-20 Gew.-%, bevorzugter 5-10 Gew.-%, bezogen auf das bei Schritt a) erhaltene Gemisch, zugegeben wird, vorzugsweise unter Rühren, um eine gemischte Zusammensetzung zu erhalten;
gegebenenfalls Schritt II) umfassend die Schritte a)-d), wobei gegebenenfalls vor oder während, vorzugsweise während, Schritt a) Thixotropiermittel, vorzugsweise Thixotropiermittel in einer Menge von 0,5-5 Gew.-%, bevorzugter 1-3 Gew.-%, bezogen auf das bei Schritt a) erhaltene Gemisch, zugegeben wird, vorzugsweise unter Rühren, um eine gemischte Zusammensetzung zu erhalten;
gegebenenfalls Schritt III) umfassend die Schritte a)-d), wobei gegebenenfalls vor, während oder nach, vorzugsweise nach (aber vor Schritt b)) Schritt a) zusätzlicher anorganischer Füllstoff, vorzugsweise Sand, vorzugsweise in 80-150 Gew.-%, bezogen auf das bei Schritt a) erhaltene Gemisch, zugegeben wird, vorzugsweise unter Rühren, um eine gemischte Zusammensetzung zu erhalten;
Schritt VI) umfassend die Schritte a)-d), wobei vorzugsweise vor oder während, vorzugsweise während, Schritt a) keine zusätzlichen Komponenten zu dem bei Schritt a) erhaltenen Gemisch gegeben werden, um eine gemischte Zusammensetzung zu erhalten.

15. Verfahren nach Anspruch 14, wobei bei den folgenden Verfahrensschritten:
Schritt I) nach Schritt d) eine Beschichtung mit einer Dicke von 0,05-0,2 mm, vorzugsweise 0,1-0,15 mm, erhalten wird; und
optionaler Schritt II) nach Schritt d) eine Beschichtung mit einer Dicke von 0,15-0,5 mm, vorzugsweise 0,25-0,35 mm, erhalten wird; und
optionaler Schritt III) nach Schritt d) eine Beschichtung mit einer Dicke von 0,8-3,5 mm, vorzugsweise 1,0-2,5 mm, erhalten wird; und
Schritt IV) nach Schritt d) eine Beschichtung mit einer Dicke von 0,1-0,8 mm, vorzugsweise 0,2-0,4 mm, erhalten wird.

16. Verfahren nach Ansprüchen 14-15, wobei bei allen Verfahrensschritten Schritt I) bis Schritt IV) eine Mehrkomponentenzusammensetzung verwendet wird, die die gleichen Komponenten und Mengen davon, bezogen auf das Gesamtgewicht der Mehrkomponentenzusammensetzung, enthält, wobei die gegebenenfalls zugesetzten Komponenten vor Schritt b) bei den Verfahrensschritten Schritt I) bis Schritt IV) nicht berücksichtigt werden.

17. Beschichtung, insbesondere Bodenbeschichtung, erhältlich durch ein Verfahren nach Ansprüchen 13-16.

## Revendications

1. Composition à plusieurs composants comprenant
A) un composant liant (A) comprenant au moins une résine époxy,
B) un composant de durcissement (B) comprenant au moins un adduit à fonction amine, qui est un produit de réaction de
(a) au moins une polyétheramine,
(b) au moins une polyalkylèneamine,
(c) au moins une amine arylaliphatique ou cycloaliphatique,
(d) au moins une résine époxy polyéther, et
(e) au moins une résine époxy liquide aromatique,
**caractérisée en ce que**
- la composition à plusieurs composants contient 9 à 22 % en poids d'au moins un adduit à fonction amine, par rapport au poids total de la composition à plusieurs composants, et
- la composition à plusieurs composants contient 15 - 35 % en poids d'au moins une charge, de préférence une charge inorganique, par rapport au poids total de la composition à plusieurs composants.

2. Composition à plusieurs composants selon la revendication 1, **caractérisée en ce que** la composition à plusieurs composants contient 26,0 à 30,5 % en poids, de préférence 27,0 à 30 % en poids, mieux encore 28,0 à 29,0 % en poids d'eau, par rapport au poids total de la composition à plusieurs composants.

3. Composition à plusieurs composants selon l'une quelconque des revendications précédentes, **caractérisée en ce que** la composition à plusieurs composants contient 11 à 20 % en poids, de préférence 13 à 17,5 % en poids, de l'au moins un adduit à fonction amine, par rapport au poids total de la composition à plusieurs composants.

4. Composition à plusieurs composants selon l'une quelconque des revendications précédentes, **caractérisée en ce que** la composition à plusieurs composants contient 17,5 à 32,5 % en poids, de préférence 20 à 30 % en poids, d'au moins une charge, de préférence une charge inorganique, par rapport au poids total de la composition à plusieurs composants.

5. Composition à plusieurs composants selon l'une quelconque des revendications précédentes, **caractérisée en ce que** la composition à plusieurs composants contient 2,75 à 15 % en poids, de préférence 4 à 12 % en poids, mieux encore 5 à 10 % en poids, mieux encore 6 à 9 % en poids d'au moins un pigment, de préférence un pigment inorganique, par rapport au poids total de la composition à plusieurs composants.

6. Composition à plusieurs composants selon l'une quelconque des revendications précédentes, **caractérisée en ce que** la polyétheramine est une polyoxypropylène diamine de poids moléculaire moyen Mn dans la plage de 200 à 2 000 g/mole, de préférence 200 à 500 g/mole, mesuré comme indiqué dans la description.

7. Composition à plusieurs composants selon l'une quelconque des revendications précédentes, **caractérisée en ce que** la polyalkylèneamine est une amine de formule (I), 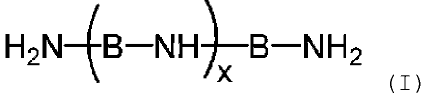 dans laquelle
x est un nombre entier de 1 à 6, et
B est indépendamment l'un de l'autre un groupe alkylène en C₂ à C₆.

8. Composition à plusieurs composants selon l'une quelconque des revendications précédentes, **caractérisée en ce que** l'amine arylaliphatique ou cycloaliphatique présente deux groupes amine primaire, est exempte de groupes amine secondaire ou tertiaire et a un poids moléculaire dans la plage de 100 à 300 g/mole.

9. Composition à plusieurs composants selon l'une quelconque des revendications précédentes, **caractérisée en ce que** le rapport pondéral de l'eau contenue dans le composant liant (A) sur l'eau contenue dans le composant durcisseur (B) est de 0,4 à 1,1, de préférence de 0,5 à 0,9, de manière tout particulièrement préférée de 0,6 à 0,8.

10. Composition à plusieurs composants selon l'une quelconque des revendications précédentes, **caractérisée en ce que** la composition à plusieurs composants contient, par rapport au poids total de la composition à plusieurs composants, 20-45 % en poids, en particulier 25-40 % en poids, de préférence 27,5-37,5 % en poids de composant liant (A).

11. Composition à plusieurs composants selon l'une quelconque des revendications précédentes, **caractérisée en ce que** le rapport stoechiométrique de la fonctionnalité amine sur la fonctionnalité époxy est de 0,90 : 1 - 1,30 : 1, de préférence 1,00 : 1 - 1,20 : 1, plus préférentiellement 1,05 : 1 - 1,15 : 1.

12. Composition à plusieurs composants selon l'une quelconque des revendications précédentes, **caractérisée en ce que** la composition à plusieurs composants contient 0,1 - 2,0 % en poids, de préférence 0,2 - 1,0 % en poids, plus préférentiellement 0,4 - 0,8 % en poids, d'au moins un accélérateur pour la réaction entre amines et époxydes, de préférence choisi dans la liste constituée par les acides, nitrates, amines tertiaires et bases de Mannich, particulièrement préférablement choisi dans la liste constituée par l'acide salicylique, le nitrate de calcium et le 2,4,6-tris(diméthylaminométhyl)phénol, le plus préférablement le 2,4,6-tris(diméthylaminométhyl)phénol, sur la base du poids total de la composition à plusieurs composants.

13. Procédé de production d'un revêtement, de préférence d'un revêtement de sol, avec une composition à plusieurs composants selon l'une quelconque des revendications 1 à 12, dans lequel le procédé comprend les étapes de procédé suivantes :
a) mélange du composant liant (A) et du composant de durcissement (B),
b) application de la composition mélangée obtenue sur un substrat,
c) éventuellement lissage ou désaération de la composition mélangée appliquée et
d) durcissement de la composition mélangée appliquée pour obtenir le revêtement.

14. Procédé selon la revendication 13, le procédé comprenant les étapes de procédé suivantes :
étape I) comprenant les étapes a) - d), éventuellement avant ou pendant, de préférence pendant, l'étape a) de l'eau supplémentaire, de préférence de l'eau supplémentaire en une quantité de 1 à 20 % en poids, plus préférablement de 5 à 10 % en poids, sur la base du mélange obtenu dans l'étape a), étant ajoutée, de préférence sous agitation, afin d'obtenir une composition mélangée ;
éventuellement étape II) comprenant les étapes a) - d), dans lequel éventuellement avant ou pendant, de préférence pendant, l'étape a) des agents thixotropiques, de préférence des agents thixotropiques en une quantité de 0,5 à 5 % en poids, plus préférablement de 1 à 3 en poids, par rapport au mélange obtenu à l'étape a) étant ajoutés, de préférence pendant agitation, afin d'obtenir une composition mélangée ;
éventuellement étape III) comprenant les étapes a) - d), dans lequel éventuellement avant, pendant ou après, de préférence après (mais avant l'étape b)), l'étape a) une charge inorganique supplémentaire, de préférence du sable, de préférence en 80 à 150 % en poids, sur la base du mélange obtenu à l'étape a), étant ajoutée, de préférence sous agitation, afin d'obtenir une composition mélangée ;
étape VI) comprenant les étapes a) - d), de préférence avant ou pendant, de préférence pendant, l'étape a) aucun composant supplémentaire n'étant ajouté au mélange obtenu à l'étape a), afin d'obtenir une composition mélangée.

15. Procédé selon la revendication 14, dans lequel, dans les étapes de procédé suivantes :
étape I) après l'étape d) un revêtement ayant une épaisseur de 0,05 à 0,2 mm, de préférence de 0,1 à 0,15 mm, est obtenu ; et
étape II) éventuelle après l'étape d) un revêtement de 0,15 à 0,5 mm d'épaisseur, de préférence 0,25 à 0,35 mm, est obtenu ; et
étape III) éventuelle après l'étape d) un revêtement de 0,8 à 3,5 mm d'épaisseur, de préférence 1,0 à 2,5 mm, est obtenu ; et
étape IV) après l'étape d), un revêtement d'une épaisseur de 0,1 à 0,8 mm, de préférence de 0,2 à 0,4 mm, est obtenu.

16. Procédé selon les revendications 14 à 15, dans lequel, dans toutes les étapes de procédé étape I) - étape IV), une composition à plusieurs composants est utilisée qui contient les mêmes composants et leur quantité, par rapport au poids total de la composition à plusieurs composants, sans tenir compte des composants éventuellement ajoutés avant l'étape b) dans les étapes de procédé étape I) - étape IV).

17. Revêtement, en particulier revêtement de sol, pouvant être obtenu par un procédé selon les revendications 13 à 16.
